Europäisches Patentamt

(19) European Patent Office

Office européen des brevets

(11) Numéro de publication: **0 075 120**
**B1**

(12) **FASCICULE DE BREVET EUROPEEN**

(51) Int. Cl.⁴: **H 04 M 1/274**

(45) Date de publication du fascicule du brevet:
02.05.85

(21) Numéro de dépôt: **82107693.2**

(22) Date de dépôt: **23.08.82**

(54) **Composeur automatique de numéros de téléphone.**

(30) Priorité: **23.09.81 CH 6127/81**

(43) Date de publication de la demande:
**30.03.83 Bulletin 83/13**

(45) Mention de la délivrance du brevet:
**02.05.85 Bulletin 85/18**

(84) Etats contractants désignés:
**AT BE DE FR GB IT LU NL SE**

(56) Documents cités:
**WO - A - 81/02481**
**FR - A - 2 437 120**

**PATENTS ABSTRACTS OF JAPAN, vol. 3, no. 139, 17 novembre 1979, page 121 E 152;**

(73) Titulaire: **LUPA FINANCES S.A., 21 Rue Glesener Boîte Postale 1173, L-1631 Luxembourg (LU)**

(72) Inventeur: **Hegi, Paul, 13, Chemin du Gamay, CH-1233 Bernex, Genève (CH)**

(74) Mandataire: **Micheli, Michel-Pierre et al, MICHELI & CIE 118, Rue du Rhône Case Postale 47, CH-1211 Genève 6 (CH)**

# Description

Il existe différents types de composeurs automatiques de numéros de téléphone, tel par exemple celui développé par la titulaire et dénommé Multimil 2031 permettant de mémoriser plus de deux cents numéros de téléphone de vingt digits. Un certain nombre de ces numéros de téléphone peuvent être automatiquement appelés par l'actionnement de boutons spéciaux, tandis que d'autres, moins fréquemment utilisés, sont appelés à l'aide d'un code à deux ou trois chiffres composés sur un clavier, clavier servant également à composer en entier les numéros de téléphone qui ne sont pas enregistrés dans les mémoires du composeur automatique.

Le principal inconvénient d'un tel composeur automatique est qu'il est personnalisé, c'est-à-dire qu'il est programmé pour composer automatiquement les numéros de téléphone que son utilisateur habituel appelle fréquemment. De même, si cet utilisateur veut bénéficier de ces appels automatiques, il est obligé de les demander à partir de son appareil individuel.

Les « Patents Abstracts of Japan », vol. 3, N° 139 du 17 novembre 1979, p. 121 E 152, divulguent un composeur automatique de numéros de téléphone comportant une partie amovible enfichable dans une partie fixe, la partie amovible contenant une mémoire mémorisant des numéros d'appels téléphoniques.

On retrouve ici le principal inconvénient cité plus haut, à savoir que la partie amovible contenant les numéros d'appel ne peut être utilisée en fonctionnement automatique qu'avec le poste fixe sur lequel elle a été enregistrée.

La présente invention a pour objet un composeur automatique de numéros de téléphone comportant une unité de commande 100, une unité de mémorisation 200 comprenant une mémoire mémorisant des numéros d'appels téléphoniques, une unité de clavier 300, une unité d'affichage 400, des unités d'alimentation 550 et de régulation 500, des unités d'amplification 600 et de réglage automatique du niveau des signaux 700, une unité de traitement de signaux 900 et une unité de liaison avec une ligne téléphonique 800, dans lequel au moins l'unité de mémorisation 200 est logée dans une partie amovible, enfichable dans une partie fixe, caractérisé par le fait que l'unité de mémorisation 200 contient une mémoire A mémorisant des informations d'identification correspondant à un réseau de téléphone local et qu'une mémoire IC 103 de l'unité de commande 100, logée dans la partie fixe, contient des informations d'identification correspondant au réseau de téléphone local auquel cette partie fixe est branchée, et par le fait que la mémoire IC 103 de l'unité de commande 100 comporte encore un programme d'identification interrogeant les informations d'identification de la partie amovible 200 enfichée dans une partie fixe et les compare à celles de cette partie fixe et commandant des modifications du programme de fonctionnement de l'unité de commande 100 en fonction du résultat de cette comparaison.

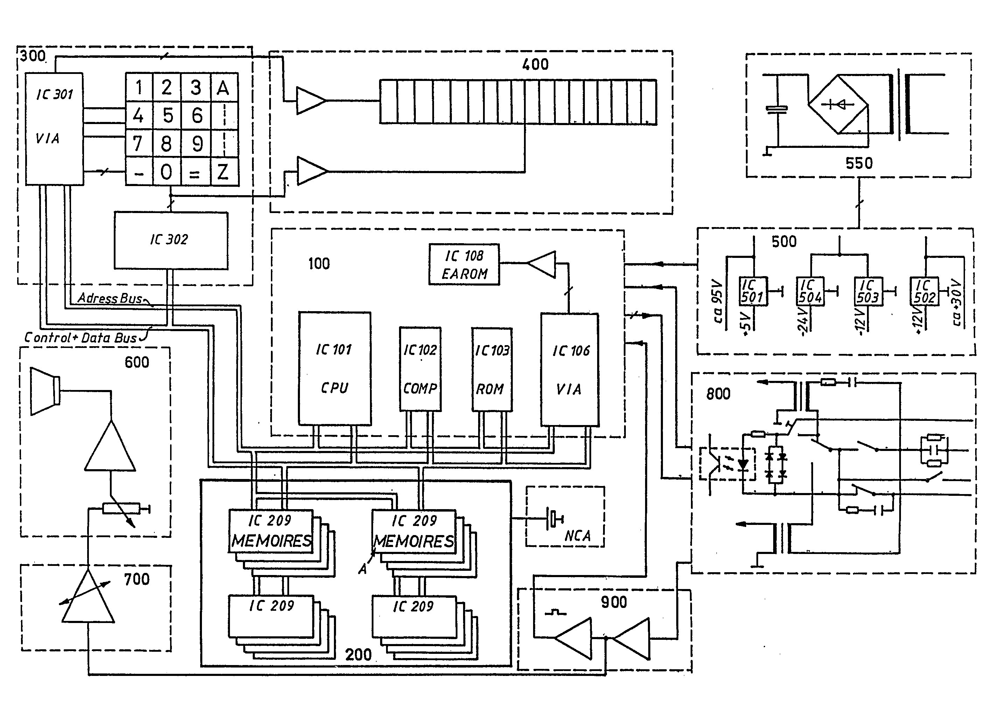

Le dessin annexé illustre schématiquement et à titre d'exemple une forme d'exécution du composeur automatique selon l'invention sous forme de schéma bloc.

Le présent composeur automatique de numéros de téléphone tend à obvier aux inconvénients précités et comporte une partie fixe, reliée à un appareil téléphonique ou au réseau téléphonique, comportant un microprocesseur muni d'une mémoire stockant, d'une part, les informations variables d'un pays à l'autre relatives aux fréquences et intervalles pour les reconnaissances de tonalités, intervalles pour la sélection des informations d'identification propres au poste particulier, soit les codes locaux et internationaux de l'endroit où est installée cette partie fixe du composeur et, d'autre part, les mêmes informations relatives aux codes locaux et internationaux d'autres localités. Il comporte encore une partie amovible munie d'une mémoire stockant, d'une part les numéros téléphoniques désirés par l'utilisateur et, d'autre part, une information d'identification comprenant des codes locaux et internationaux identiques à ceux de ladite partie fixe. Le microprocesseur est programmé de telle façon que, lors de l'insertion dans la partie fixe d'une partie amovible, il interroge les informations d'identification de la partie amovible, les compare aux informations d'identification de la partie fixe et modifie, si ces informations d'identification ne sont pas identiques, les codes locaux et/ou internationaux des numéros téléphoniques stockés dans la mémoire de la partie amovible en fonction desdites informations d'identification de la partie fixe.

Le composeur automatique illustré de façon schématique au dessin travaille avec un microprocesseur 6500 comme unité de commande qui comporte un bus de donnée à 8 bits et un bus d'adresse à 16 bits ainsi que le bus de commande.

Les connexions de ce microprocesseur avec les unités à commander s'effectuent par l'intermédiaire d'une interface 6522. Toutes les fonctions du composeur sont surveillées et commandées par le microprocesseur.

Sur le schéma bloc, les différentes fonctions ont été regroupées en unités pour permettre une description et une compréhension meilleures des différentes fonctions unitaires. Cette répartition en unités comporte les unités suivantes:

l'unité de commande 100
l'unité de mémorisation 200
le clavier 300
l'affichage 400
la régulation de tension 500
l'alimentation 550
l'ampli audio 600
le réglage automatique du niveau 700
la liaison avec la ligne téléphonique 800
le traitement des signaux 900

Un certain nombre de ces unités sont déjà bien connues et utilisées sur les appareils Multimil 2000 et Multimil 2031D et ne seront pas décrites en détail ici. Il s'agit notamment des unités de clavier 200, d'affichage 400, d'alimentation et de régulation de tension 550 et 500, d'amplification audio 600, de réglage automatique du niveau 700, de liaison avec la ligne téléphonqiue 800 et du traitement des signaux 900. Une description détaillée du fonctionnement et de la construction de ces unités peut notamment être trouvée dans la brochure relative au Multimil 2031 D actuellement sur le marché.

L'unité de commande 100 comporte une unité centrale de programmes CPU 6502, une ou plusieurs mémoires de programmes ROM (IC103) constituée par exemple par des EPROM 2Kx8 2716, un comparateur IC102, une mémoire EAROM (IC108) 100x14 ER 1400 et une interface VIA (IC106) 6522.

Dans la mémoire EAROM (IC108) on enregistre, à la fabrication de l'appareil, des informations variables d'un pays à l'autre comme les fréquences et les intervalles pour la reconnaissance de la tonalité de ligne libre, occupée, etc., les intervalles de sélection lors de la composition d'un numéro d'appel ainsi que les différents codes internationaux et locaux permettant la sélection des pays et des localités de ces pays. Dans cette mémoire EAROM IC108, on enregistre également des informations d'identification, par exemple sous la forme du code local et du code international de l'endroit où est placé le composeur automatique. Il est évident que cette information d'identification est introduite par l'usager lui-même à l'aide du clavier et des éléments faisant partie de l'unité 300.

Alors que, dans l'exemple illustré, les unités 100, 300, 400, 550, 500, 600, 700, 800 et 900 sont montées dans une partie fixe du composeur automatique destinée à être reliée au réseau téléphonique ou à un poste de téléphone local, l'unité de mémorisation 200 forme une partie amovible du composeur automatique, enfichable dans la partie fixe de celui-ci.

Cette unité de mémorisation 200 comporte des mémoires du type RAM ou COSRAM IC209 dans lesquelles sont introduits et mémorisés, à l'aide de l'unité composant le clavier 300, les numéros des correspondants que l'usager désire appeler fréquemment et leur code abrégé de 1, 2 ou 3 digits. Ces numéros de téléphone enregistrés comportent, pour les numéros locaux, c'est-à-dire ceux du réseau local auquel est branchée la partie fixe du composeur, simplement le numéro de l'abonné en question.

Si l'abonné à atteindre est situé dans un autre réseau local que celui auquel la partie fixe du composeur automatique est reliée, le numéro du correspondant comporte, en plus de son numéro d'appel, le code local du réseau local dont il fait partie.

Si l'abonné à atteindre est situé dans un autre pays, en plus du numéro d'appel du correspondant, on enregistre également son code local et son code international.

De plus, dans une partie A d'une des mémoires RAM IC209, on enregistre une information d'identification qui consiste dans le code local et le code international correspondant à la partie fixe du composeur à laquelle cette partie amovible appartient.

Enfin, l'une des mémoires ROM, par exemple la mémoire de programme IC103 de l'unité de commande 100, comporte un programme d'identification qui, lorsqu'on enfiche une partie amovible d'un composeur automatique dans la partie fixe d'un tel composeur automatique, interroge l'information d'identification de la partie amovible et la compare à l'information d'identification de la partie fixe.

Trois cas peuvent se présenter lors de l'utilisation du composeur automatique décrit:

a) Les informations d'identification des parties fixe et amovible sont identiques, ce qui veut dire que les numéros d'appel mémorisés dans la partie amovible ont été enregistrés à l'aide d'une partie fixe faisant partie du même réseau téléphonique local que celle avec laquelle l'unité de mémorisation de la partie amovible avait été enregistrée.

Dans ce cas, la mémoire de programme ROM IC103, ayant provoqué cette comparaison et constaté l'identité des informations d'identification, indique à l'unité centrale de programme CPU d'utiliser le programme normal d'utilisation de l'unité de mémorisation. Ce programme normal comporte notamment la sélection par le code approprié, à l'aide de l'unité tabulatrice 300, d'un numéro d'appel complet, c'est-à-dire, le cas échéant, du code international, du code local et du numéro de l'abonné mémorisé dans l'unité de mémorisation de la partie amovible du composeur automatique. Dans ce cas, le fonctionnement du présent composeur automatique est ensuite identique au fonctionnement du Multimil 2031 D.

b) Deuxièmement, l'utilisateur désire utiliser la partie amovible du composeur automatique conjointement avec une partie fixe compatible mais branchée sur un autre réseau local du pays où est branchée la partie fixe appartenant audit utilisateur.

Dans ce cas, les informations d'identification de la partie mobile ne sont que partiellement identiques à celles de la partie fixe utilisée. En effet, le code international est identique, mais le code local ne l'est pas.

La mémoire de programme ROM IC103, ayant provoqué la comparaison de ces informations d'identification et constaté l'identité partielle seulement de celles-ci, indique à l'unité centrale de programme CPU de modifier le programme de fonctionnement normal en ce sens que, pour chaque appel national utilisant un numéro d'appel enregistré dans la mémoire de la partie amovible ne comportant pas de code international ni de code local, un code local soit ajouté à l'aide de la mémoire EAROM IC108, correspondant au code local du lieu de domicile de l'utilisateur. De plus, pour chaque numéro d'appel national destiné au réseau local sur lequel est branchée la partie fixe utilisée momentanément par l'utilisateur, le code local qui figure dans la mémoire de la partie amovible est supprimé.

Ainsi, supposons que l'information d'identification de la partie fixe utilisée momentanément soit:

accès international 00
accès interurbain 0
indicatif du pays 41
indicatif interurbain 01

et que l'information d'identification de la partie amovible de l'utilisateur soit:

accès international 00
accès interurbain 0
indicatif du pays 41
indicatif interurbain 22

alors, lorsque l'usager utilise sa partie amovible avec la partie fixe d'emprunt et qu'il veut atteindre le correspondant genevois dont le numéro est mémorisé sous la forme d'un simple numéro d'abonné à six chiffres 12 34 56 avec une partie fixe reliée au réseau zurichois, le numéro d'appel est automatiquement réalisé avec l'accès et l'indicatif interurbain genevois 022 avant le numéro d'abonné.

c) Troisièmement, l'utilisateur, ayant enregistré la mémoire de la partie mobile du composeur automatique sur une partie fixe à Genève, en Suisse, se rend à Stockholm, en Suède, et désire utiliser cette partie amovible avec une partie fixe d'un composeur automatique branché sur le réseau de Stockholm.

L'information d'identification de la partie mobile, enregistrée à Genève, est:

accès international 00
accès interurbain 0
indicatif du pays 41
indicatif interurbain 22

L'information d'identification de la partie fixe du composeur automatique situé à Stockholm est:

accès international 009
accès interurbain 0
indicatif du pays 46
indicatif interurbain 8

La mémoire de la partie enregistrée à Genève porte par exemple les numéros d'appel suivants:

1. un numéro local à Genève 47 04 55
2. un numéro en Allemagne 00/49/30/795366
3. un numéro à Stockholm 00/46/8/7131414

Si cette partie amovible est utilisée sur le poste fixe suédois alors automatiquement ces numéros seront modifiés comme suit:

1. *009/41/22/*47 04 55
2. *009/49/30/*79 53 66
3. 7131414

Dans le premier cas, on aura donc automatiquement ajouté au numéro de Genève l'accès international 009, l'indicatif de la Suisse 41 et l'indicatif de Genève 22 avant le numéro de l'abonné.

Dans le second cas, l'appareil remplace simplement l'accès international 00 par 009.

Et, dans le troisième cas, l'accès international 00, l'indicatif du pays et l'indicatif interurbain sont supprimés.

On voit ainsi qu'un usager disposant d'une partie amovible d'un composeur automatique peut enregistrer les mémoires de celle-ci à l'aide de son poste fixe habituel, puis utiliser cette même partie amovible, sans aucune modification, avec n'importe quel autre composeur automatique compatible relié à d'autres réseaux locaux ou nationaux.

Le branchement d'une partie amovible sur une partie fixe d'un composeur automatique peut se faire par enfichage ou tout autre moyen connu permettant de connecter les mémoires RAM IC209 sur les bus d'adresse, de commande et d'information du microprocesseur de la partie fixe.

Dans la forme d'exécution décrite, la partie amovible du composeur automatique comporte uniquement l'unité de mémorisation 200, tandis que toutes les autres unités 100, 300 à 900 sont comprises dans la partie fixe du composeur automatique.

Il est évident que, dans ces variantes du composeur, la partie amovible pourrait comporter, en plus de l'unité de mémorisation 200, tout ou partie des unités de commande 100, à l'exception de la mémoire IC103 de l'unité de commande contenant les informations d'identification, correspondant au réseau local auquel la partie fixe est branchée, de tabulation 300 et d'affichage 400. Il est évident que les éléments qui auraient ainsi été incorporés dans les parties amovibles du composeur ne se retrouveraient plus dans la partie fixe de celui-ci.

Il est également évident que la technologie utilisée pour la réalisation du composeur automatique importe peu. L'originalité essentielle de ce composeur de numéros de téléphone automatique réside dans le fait qu'il comporte une partie ou poste fixe relié à un réseau téléphonique déterminé et une partie amovible pouvant être emportée par l'usager et utilisée avec tout autre poste fixe compatible sans que les numéros de téléphone des correspondants habituels de l'usager enregistrés dans le dispositif électronique de la partie amovible doivent être modifiés. Le microprocesseur, ou partie électronique du composeur, logé en partie dans le poste fixe et en partie dans la partie mobile, mémorise les informations, tant les codes que les instructions de programme nécessaires pour reconnaître en fonction de quel réseau téléphonique local les mémoires de la partie amovible ont été enregistrées et modifie ces enregistrements de façon automatique en fonction du réseau téléphonique auquel la partie fixe utilisée est raccordée.

Dans d'autres variantes, l'unité de mémorisation peut comporter encore d'autres informations, telles que les numéros d'appel de la police, des pompiers, etc.

Il est évident que, dans certaines variantes, des mémoires peuvent être prévues dans la partie fixe du dispositif qui, alors, comporterait également une unité de mémorisation.

## Revendications

1. Composeur automatique de numéros de téléphone comportant une unité de commande (100), une unité de mémorisation (200) comprenant une mémoire mémorisant des numéros d'appels téléphoniques, une unité de clavier (300), une unité d'affichage (400), des unités d'alimentation (550) et de régulation (500), des unités d'amplification (600) et de réglage automatique du niveau des signaux (700), une unité de traitement de signaux (900) et une unité de liaison avec une ligne téléphonique (800), dans lequel au moins l'unité de mémorisation (200) est logée dans une partie amovible, enfichable dans une partie fixe, caractérisé par le fait que l'unité de mémorisation (200) contient une mémoire (A) mémorisant des informations d'identification correspondant à un réseau de téléphone local et qu'une mémoire (IC103) de l'unité de commande (100), logée dans la partie fixe, contient des informations d'identification correspondant au réseau de téléphone local auquel cette partie fixe est branchée, et par le fait que la mémoire (IC103) de l'unité de commande (100) comporte encore un programme d'identification interrogeant les informations d'identification de la partie amovible (200) enfichée dans une partie fixe et les compare à celles de cette partie et commande des modifications du programme de fonctionnement de l'unité de commande (100) en fonction du résultat de cette comparaison.

2. Composeur selon la revendication 1, caractérisé par le fait que tout ou partie des unités de commande (100) et/ou de clavier (300), à l'exception de la mémoire (IC103) de l'unité de commande contenant les informations d'identification correspondant au réseau local auquel la partie fixe est branchée, sont également comprises dans la partie amovible.

3. Composeur selon la revendication 1, caractérisé par le fait que les informations d'identification sont constituées par un code donnant l'accès international, l'accès interurbain, l'indicatif du pays et l'indicatif interurbain.

**Patentansprüche**

1. Automatische Telephonnummernwähleinrichtung mit einer Betätigungseinrichtung (100), einer Speichereinheit (200), die einen Speicher aufweist, der telephonische Rufnummern speichert, mit einer Tasteneinheit (300), einer Anzeigeeinheit (400), Speise- bzw. Stromversorgungseinheiten (550) und Regel- bzw. Steuereinheiten (500), Verstärkereinheiten (600) und Einheiten (700) für die automatische Regelung der Signalpegel, einer Einheit (900) für die Signalverarbeitung und einer Einheit (800) für die Verbindung mit einer Telephonleitung, bei welcher Einrichtung wenigstens die Speichereinheit (200) in einem lösbaren bzw. auswechselbaren Teil bzw. Abschnitt untergebracht ist, der in einen feststehenden Teil bzw. Abschnitt einsteckbar ist, dadurch gekennzeichnet, dass die Speichereinheit (200) einen Speicher (A) enthält, der Identifizierungsinformationen speichert, die einem örtlichen Telephonnetz entsprechen, und dass ein Speicher (IC103) der Betätigungseinheit (100), die im feststehenden Teil bzw. Abschnitt untergebracht ist, Identifizierungsinformationen enthält, die dem örtlichen Telephonnetz entsprechen, an welches der feststehende Teil bzw. Abschnitt angeschlossen ist, und dass der Speicher (IC103) der Betätigungseinheit (100) weiters ein Identifizierungsprogramm umfasst, das die Identifizierungsinformationen des lösbaren Teils bzw. Abschnittes (200) abfragt, der in einen feststehenden Teil bzw. Abschnitt eingesteckt ist, und sie mit jenen dieses feststehenden Teils bzw. Abschnittes vergleicht und Veränderungen im Funktionsprogramm der Betätigungseinheit (100) in Abhängigkeit vom Ergebnis dieses Vergleiches durchführt.

2. Telephonnummernwähleinrichtung nach Anspruch 1, dadurch gekennzeichnet, dass alle Betätigungseinheiten (100) oder ein Teil derselben und/oder alle Tasteneinheiten (300) oder ein Teil derselben mit Ausnahme des Speichers (IC103) der Betätigungseinheit, der die Identifizierungsinformationen enthält, welche dem lokalen Telephonnetz entsprechen, an das der feststehende Teil bzw. Abschnitt angeschlossen ist, ebenfalls im lösbaren bzw. auswechselbaren Teil bzw. Abschnitt untergebracht sind.

3. Telephonnummernwähleinrichtung nach Anspruch 1, dadurch gekennzeichnet, dass die Identifizierungsinformationen aus einem Kode bestehen, der die internationale Durchwahl, die interurbane Durchwahl, die Landeskennzahl und die interurbane Kennzahl angibt.

**Claims**

1. Automatic telephone number dialer comprising a control unit (100), a memory unit (200) comprising a memory storing telephone numbers, a keyboard unit (300), a display unit (400), feeding (550) and regulating (500) units, amplification (600) and automatic level adjusting (700) units, a signal treatment unit (900) and a connecting unit with the telephonic line (800), in which at least the memorization unit (200) is located in a removable portion, which can be plugged in a fixed portion, characterized by the fact that the memorization unit (200) contains a memory (A) storing identification informations corresponding to a local telephone network and that a memory (IC103) of the control unit (100) located in the fixed portion contains identification informations corresponding to the local telephone network to which this fixed portion is connected and by the fact that the memory (IC103) of the control unit (100) comprises further an identification program consulting the identification informations of the removable part (200) plugged in a fixed portion and compare them to those of said fixed portion and controls modifications of the working program of the control unit (100) in function of the result of said comparison.

2. Dialer according to Claim 1, characterized by the fact that all or parts of the control unit (100) and/or of the keyboard (300), with the exception of the memory (IC103) of the control unit containing the identification informations corresponding to the local network to which the fixed portion is connected, are also housed in the removable portion.

3. Dialer according to Claim 1, characterized by the fact that the identification informations are constituted by a code giving the international access, the local access, the land code and the local code.

550

500

IC 502 +12V    CD +30V

IC 503 -12V

IC 504 -24V

IC 501 +5V    CD 95V

800

400

100

IC 108 EAROM

IC 106 V/A

IC103 ROM

IC102 COMP

IC 101 CPU

NCA

900

IC 209 MEMOIRES

IC 209

A

200

300

IC 301 V/A

IC 302

| 1 | 2 | 3 | A |
|---|---|---|---|
| 4 | 5 | 6 | - |
| 7 | 8 | 9 | = |
| - | 0 | | Z |

Adress Bus

Control+ Data Bus

600

700